# EUROPÄISCHE PATENTANMELDUNG

(11) **EP 1 014 476 A1**
(43) Veröffentlichungstag der Anmeldung: **28.06.2000**
(21) Anmeldenummer: 99121727.4
(22) Anmeldetag: 03.11.1999
(51) Int. Cl.: H01Q 1/12, H01Q 1/32

(54) **Antennensystem für eine satellitengestützte Fahrzeug-Navigationseinrichtung**

(30) Priorität: 17.12.1998 DE 19858299
(71) Anmelder: DaimlerChrysler AG, 70567 Stuttgart (DE)
(72) Erfinder: Grantz, Helmut, 71067 Sindelfingen (DE); Heuthe, Ronald, 74382 Neckarwestheim (DE); Petri, Volker, 71134 Aidlingen (DE); Reeb, Max, 73033 Göppingen (DE); Wagner, Hannes, 73733 Esslingen (DE)

(57) **Zusammenfassung**

Die Erfindung bezieht such auf ein Antennensystem für eine satellitengestützte Navigationseinrichtung in einem Fahrzeug, wobei das System einen außenseitig an einer Montagefläche der Fahrzeugkarosserie anzuordnenden Systemteil, der ein Antennenbauteil beinhaltet, einen innenseitig anzuordnenden Systemteil und Kopplungsmittel zur Antennensignalkopplung und/oder Stromversorgungskopplung von außenseitigem und innenseitigem Systemteil umfaßt.

Erfindungsgemäß bestehen die Kopplungsmittel aus Signalübertragungsmitteln, welche Stromversorgungssignale und bei Bedarf auch Datensignale drahtlos durch die Montagefläche hindurch zwischen außenseitigem und innenseitigem Systemteil übertragen.

Verwendung beispielsweise für Navigationseinrichtungen von Automobilen.

## Beschreibung

Die Erfindung bezieht sich auf ein Antennensystem nach dem Oberbegriff des Anspruchs 1. Antennensysteme dieser Art dienen zur Kommunikation fahrzeugseitiger Navigationssysteme mit Satelliten zwecks Bestimmung der Fahrzeugposition, beispielsweise in Form des sogenannten GPS (Global Positioning System).

Ein solches Antennensystem ist aus der US 5 105 201 bekannt. Darin ist ein Antennensystem für ein Autoradio beschrieben, das eine auf der Heckscheibe eines Kraftfahrzeugs angeordnete Antenne umfaßt, der ein auf der Außenseite der Heckscheibe liegender Resonanzschwingkreis zugeordnet ist. Diesem Resonanzschwingkreis gegenüberliegend befindet sich auf der Innenseite der Heckscheibe ein weiterer Resonanzschwingkreis, der mit dem außenliegenden Resonanzschwingkreis elektromagnetisch gekoppelt ist und die in ihn eingekoppelten Signale einem Radioempfänger zuführt. Damit kann der Radioempfänger ohne direkte Leitungsverbindung zur Antenne Radiosignale empfangen.

Bei den herkömmlichen Antennensystemen der eingangs genannten Art ist das Antennenbauteil selbst, das für den vorliegenden Anwendungszweck häufig als sogenannte Patch-Antenne ausgeführt ist, zur außenseitigen Anbringung an eine vorgegebene Montagefläche vorgesehen, z.B. an einer Fahrzeugheckscheibe. Zur optimalen Kommunikation mit den oberhalb des Horizonts befindlichen Satelliten ist die Wahl eines möglichst waagrecht verlaufenden Karosserieteils des Fahrzeugs als Montagefläche bevorzugt. Die vorliegende außenseitige Montage des Antennenbauteils hat gegenüber alternativ gebräuchlichen Systemen mit innenseitig an einem Fahrzeugkarosserieteil angebrachtem Antennenbauteil den Vorteil, daß sie keine so präzise Abstimmung der Antenne und keine so exakte Montage derselben erfordert. Sie ist daher gut für Nachrüstungen geeignet, und in Serienanwendungen entfällt die Notwendigkeit einer eigenen Antennenabstimmung auf die jeweilige Material- und Geometriesituation der Montagefläche für verschiedene Fahrzeugtypen.

Meist beinhalten die Antennensysteme, z.B. für das GPS, einen Antennenverstärker zum Ausgleich von Leitungsverlusten und zur Impedanzanpassung, der üblicherweise mit dem Antennenbauteil eine gemeinsame Baueinheit bildet und von einer Gleichspannungsversorgung gespeist wird. Des weiteren weist das Antennensystem eine Signalverarbeitungseinheit auf, z.B. in Form einer Empfänger- und Auswerteeinheit, d.h. eines Receivers, welche von den Satelliten über das Antennenbauteil empfangene HF-Ortungssignale demoduliert, decodiert und daraus die aktuelle Fahrzeugposition bestimmt, die sie dann als Positionsdatensignal mit einem standardisierten seriellen Datenprotokoll an ein Navigationsgerät weiterleitet.

Herkömmliche Antennensysteme der eingangs genannten Art, die neben der satellitengestützten Fahrzeugpositionsbestimmung auch noch andere Funkübertragungsfunktionen haben können, z.B. für ein Mobiltelefon und/oder ein Autoradio, sind in den Aufsätzen "Dynamische Verkehrsleitsysteme", Funkschau 13/1997, S. 26 und "Microstrip-Antennen", Funkschau 6/1998, Arbeitsblätter Antennen, Teil 10 sowie G. Splitt, H. Forster "Mehrelemente-Satelliten-Mobilfunk Antennen für GPS- und Kommunikationsanwendung in Microstrip-Technologie, Fachausschuß "Antennen" der ITG, Diskussionssitzung am 1.4.1992 beschrieben. Diese und weitere derartige, auf dem Markt angebotene Antennensysteme benötigen einen Durchbruch durch die Montagefläche, um die Gleichspannungsversorgungsleitung für den Antennenverstärker und/oder die Signalleitung durchzuführen, mit dem das Verstärkerausgangssignal zur innenseitigen Signalverarbeitungseinheit geführt wird. Hierzu ist es bekannt, ein einziges Koaxialkabel zu verwenden und über dieses Signalkabel die Stromversorgung als sogenannte Phantomspeisung zu bewerkstelligen.

In der DE 43 29 697 A1 ist eine Zugangskontrolleinrichtung z.B. in Form einer Zentralverriegelungsanlage eines Kraftfahrzeuges beschrieben, die in diesem Fall eine fahrzeugfeste Sende- und Empfangseinheit umfaßt. Diese Sende- und Empfangseinheit vermag Informationssignale mit einer tragbaren Transpondereinheit auszutauschen, um außerhalb des Fahrzeugs die Fernbedienung einer Zentralverriegelungsanlage zu ermöglichen. In einem Normalbetriebsmodus bezieht die Transpondereinheit ihre elektrische Energie aus einer Knopfzelle. In einem Notbetriebsmodus ist vorgesehen, die zum Betrieb des Transponders benötigte Energie einem dann verlängerten oder wiederholten Fragecodesignal zu entziehen, das von der fahrzeugfesten Sende- und Empfangseinheit abgestrahlt wird.

In der US 5 557 270 ist eine kapazitive Kopplungseinrichtung für zwei Koaxialkabel offenbart. Die Kopplungseinrichtung umfaßt eine dielektrische Platte, z.B. eine Glasplatte, auf deren gegenüberliegenden Seiten jeweils Elektroden vorgesehen sind. Diese Elektroden sind jeweils über eine Induktivität mit dem Leitungskern der beiden Koaxialkabel verbunden. Zu beiden Seiten der dielektrischen Platte ist ein leitendes Gehäuse vorgesehen, das an den leitfähigen Mantel der Koaxialleiter angeschlossen ist.

Der Erfindung liegt als technisches Problem die Bereitstellung eines Antennensystems der eingangs genannten Art zugrunde, das keine Durchbrüche in der Montagefläche benötigt und weitgehend unabhängig von Material und Geometrie der Montagefläche ist und sich daher auch gut zur Nachrüstung eignet.

Die Erfindung löst dieses Problem durch die Bereitstellung eines Antennensystems mit den Merkmalen des Anspruchs 1. Bei diesem System bestehen die Kopplungsmittel zwischen außenseitigem und innenseitigem Systemteil aus Signalübertragungsmitteln, welche die Stromversorgung und vorzugsweise auch die Datenkommunikation durch die Montagefläche hindurch drahtlos und daher ohne Notwendigkeit von Durchbrüchen in der Montagefläche bewerkstelligen. Im Fall der Stromversorgung erfolgt dies vorzugsweise induktiv. Das Antennensystem eignet sich zur Montage auf Glas und allen anderen nichtleitenden Montageflächen. Wegen der außenseitigen Anordnung des Antennenbauteile treten nicht die z.B. einer Hinterglasmontage inhärenten Schwierigkeiten hinsichtlich Dämpfung, Abschaltung und Verstimmung der Antenne auf. Die Auslegung des Antennensystems bleibt weitestgehend unabhängig von Material und Geometrie der Montagefläche und damit vom jeweiligen Fahrzeugtyp.

Die Übertragung der über das Antennensystem empfangenen oder gesendeten Datensignale, nachfolgend auch Antennen- oder Nutzsignale bezeichnet, durch die Montagefläche hindurch erfolgt in Weiterbildung der Erfindung nach Anspruch 2 kapazitiv, d.h. mittels elektrischer Felder, oder induktiv oder optisch, d.h. mittels entsprechender elektromagnetischer Wellen.

Bei einem nach Anspruch 3 weitergebildeten Antennensystem erfolgt eine induktive Stromversorgung mittels primärer und sekundärer, induktiver Offenfeld- oder Geschlossenfeld-Spiralpfadstrukturen, die sich in flacher Form realisieren lassen und die Übertragung ausreichender Energie auch beispielsweise zum Senden von Daten ermöglichen.

In weiterer Ausgestaltung dieser Maßnahme sind gemäß Anspruch 4 diese induktive Spiralpfadstrukturen, in der Geschlossenfeld-Ausführung mit wenigstens einmal die Umlaufrichtung wechselndem Verlauf realisiert und/oder auf ihrer Primär- und/oder Sekundärseite mit einer umschließenden Kurzschlußmaske versehen. Dies erlaubt die Übertragung vergleichsweise hoher Energien ohne störende Fernfeldbeeinflussung. In einer Weiterbildung der Erfindung nach Anspruch 5 ist die Kurzschlußmaske gleichzeitig als Heizelement ausgebildet, wodurch sich der außenseitige Systemteil stets auf einer gewissen Mindesttemperatur halten läßt.

In einer weiteren Ausgestaltung ist gemäß Anspruch 6 die primäre und/oder die sekundäre induktive Geschlossenfeld-Struktur rückseitig mit einer abdeckenden, magnetisch leitfähigen Feldführungsschicht versehen, in der das oder die übertragenden Magnetfelder geführt werden können. In einer Weiterbildung dieser Maßnahme ist gemäß Anspruch 7 die magnetisch leitfähige Feldführungsschicht auf ihrer strukturabseitigen Oberfläche elektrisch hochleitend beschichtet, so daß eine magnetische Sperrfläche gebildet wird, wodurch sich z.B. außenseitige Sende- und/oder Empfangskomponenten für Datensignale gegenüber einem elektromagnetischem Energieübertragungsfeld entkoppeln lassen.

Bei einem nach Anspruch 8 weitergebildeten Antennensystem erfolgt ein optischer Transfer der Datensignale mit separaten Lichtübertragungsstrecken für empfangene und zu sendende Datensignale.

Bei einem nach Anspruch 9 weitergebildeten Antennensystem ist dem Antennenbauteil außenseitig ein Antennenverstärker zugeordnet, zu dessen Stromversorgung entsprechende Wechselspannungssignale von einer Koppelspuleneinheit drahtlos von innen durch die Montagefläche hindurch zugeführt werden. Zudem ist eine kapazitive Koppeleinheit vorgesehen, mit der die verstärkten Antennensignale übertragen werden. In weiterer Ausgestaltung sind gemäß Anspruch 10 das Antennenbauteil, der Antennenverstärker und eine außenseitige Koppelfäche der kapazitiven Koppeleinheit neben oder innerhalb einer außenseitigen Koppelspule der Koppelspuleneinheit angeordnet. Die letztgenannte Variante einer konzentrischen Anordnung der außenseitigen Systemkomponenten im Inneren der außenseitigen Koppelspule minimiert den Flächenbedarf des Antennenaufbaus.

Bei einem nach Anspruch 11 weitergebildeten Antennensystem ist dem Antennenbauteil außenseitig eine Signalverarbeitungseinheit zugeordnet, die insbesondere einen geeigneten Empfangs- und/oder Sendeteil und einen zugehörigen Signalaufbereitungsteil, gegebenenfalls mit Signalauswertefunktion, umfaßt. Zu deren Spannungsversorgung werden entsprechende Wechselspannungssignale über eine Koppelspuleneinheit durch die Montagefläche hindurch von innen drahtlos zugeführt. Gleichzeitig dient die Koppelspuleneinheit zur Übertragung der von der Signalverarbeitungseinheit verarbeiteten Antennensignale. In weiterer Ausgestaltung sind gemäß Anspruch 12 das Antennenbauteil und die Signalverarbeitungseinheit neben oder innerhalb einer außenseitigen Koppelspule der Koppelspuleneinheit auf der Montageflächenaußenseite positioniert. Die Variante mit konzentrischer Anordnung der außenseitigen Systemkomponenten im Inneren der außenseitigen Koppelspule ist wiederum besonders zur Erzielung eines minimalen Flächenbedarfs geeignet.

Bei einem nach Anspruch 13 weitergebildeten Antennensystem sind ein Antennenverstärker und/oder eine Signalverarbeitungseinheit zur innenseitigen Anordnung, d.h. im Inneren des Fahrzeugs und nicht an der Fahrzeugaußenseite, vorgesehen. Die Antennensignale, d.h. die vom Antennenbauteil gelieferten oder ihm zugeführten Signale, werden mittels einer kapazitiven Koppeleinheit drahtlos durch die Montagefläche hindurch zwischen dem Antennenbauteil und dem Verstärker bzw. der Signalverarbeitungseinheit übertragen.

In Weiterbildung der Erfindung gemäß Anspruch 14 beinhaltet der innenseitige Systemteil eine Koaxialleitung, über die sowohl die Antennensignale als auch die Stromversorgungs-Wechselspannungssignale geführt werden, wozu die beiden Signaltypen in vorzugsweise stark verschiedenen Frequenzbereichen liegen.

Vorteilhafte Ausführungsformen der Erfindung sind in den Zeichnungen dargestellt und werden nachfolgend beschrieben. Hierbei zeigen:
- Fig. 1: eine schematische Längsschnittansicht des Aufbaus eines ersten montierten GPS-Antennensystems in nebeneinanderliegender Anordnung mit außenliegendem Verstärker,
- Fig. 2: eine schematische Längsschnittansicht des Aufbaus eines funktionell dem ersten entsprechenden zweiten Antennensystems in konzentrischer Anordnung,
- Fig. 3: eine schematische Längsschnittansicht des Aufbaus eines dritten montierten GPS-Antennensystems in nebeneinanderliegender Anordnung mit außenliegendem Receiver,
- Fig. 4: eine schematische Längsschnittansicht des Aufbaus eines dem dritten funktionell entsprechenden vierten Antennensystems in konzentrischer Anordnung,
- Fig. 5: eine schematische Längsschnittansicht des Aufbaus eines fünften montierten GPS-Antennensystems mit innenliegendem Verstärker,
- Fig. 6: eine schematische Längsschnittansicht des Aufbaus eines Antennensystems mit Geschlossenfeld-Struktur,
- Fig. 7: eine schematische Perspektivansicht auf einen innenseitigen Systemteil eines Antennensystems mit induktiver Geschlossenfeld-Spiralstruktur,
- Fig. 8: eine schematische Draufsicht auf einen innenseitigen Systemteil eines Antennensystems mit induktiver Geschlossenfeld-Stromversorgungskopplung und optoelektronischer Datensignalkopplung,
- Fig. 9: eine schematische Schnittansicht eines außenseitigen Mehrschicht-Systemteils eines weiteren Antennensystems und
- Fig. 10: eine schematische, blockdiagrammatische Schnittansicht des Aufbaus eines z.B. für ein Telekommunikationssystem geeigneten Antennensystems.

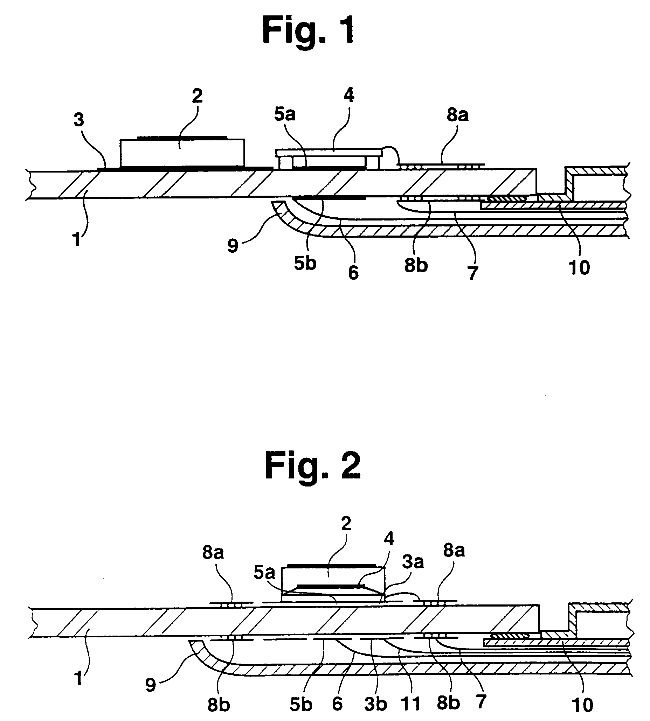

In den Fig. 1 bis 5 sind verschiedene Realisierungen von Antennensystemen für ein GPS-Navigationssystem in einem Automobil gezeigt, wobei jeweils funktionell entsprechende Elemente mit denselben Bezugszeichen bezeichnet sind. Die Antennenaufbauten sind jeweils im oberen Bereich einer als Montagefläche fungierenden Fahrzeugheckscheibe 1 montiert. Dabei ist ein außenseitiger Antennensystemteil außen an der Heckscheibe 1 angeordnet, während sich Komponenten eines innenseitigen Systemteils an der Heckscheibeninnenseite befinden. Von dort führen Leitungsverbindungen zu weiter entfernt im Fahrzeuginneren angeordneten Antennen- und/oder Navigationssystemkomponenten, wie ein GPS-Receiver und/oder ein Navitationsgerät. Den gezeigten Realisierungen ist gemeinsam, daß die Signalübertragung zwischen außenseitigem und innenseitigem Systemteil drahtlos durch die Heckscheibe 1 hindurch erfolgt, ohne daß hierfür Durchbrüche in die Heckscheibe 1 eingebracht werden müssen. Die verschiedenen Ausführungsbeispiele unterscheiden sich hauptsächlich in der Plazierung der diversen Systemkomponenten, worauf im folgenden näher eingegangen wird.

Beim Ausführungsbeispiel von Fig. 1 beinhaltet der außenseitige Systemteil ebenso wie bei allen anderen Beispielen ein auf die Heckscheibenaußenseite aufgebrachtes Antennenbauteil in Form einer GPS-Antenne 2, vorzugsweise vom herkömmlichen Typ einer Patch-Antenne. Zwischen Antenne 2 und Heckscheibe 1 ist eine Massefläche 3 als Bezugserdung eingefügt. Des weiteren umfaßt im Beispiel von Fig. 1 der außenseitige Systemteil einen neben der Antenne 2 positionierten Antennenverstärker 4, der die von der Antenne 2 empfangenen GPS-Satellitensignale abgreift und verstärkt. Zur Weiterleitung der verstärkten Antennensignale durch die Heckscheibe 1 hindurch nach innen ist eine kapazitive Koppeleinheit vorgesehen, die aus einer außenseitigen Koppelfläche 5a und einer innenseitigen Koppelfläche 5b besteht. Die außenseitige Koppelfläche 5a ist auf die Heckscheibenaußenseite unter dem Aufbau des Antennenverstärkers 4 aufgebracht und mit letzterem leitungsverbunden. Die innenseitige Koppelfläche 5b ist der außenseitigen Koppelfläche 5a gegenüberliegend an der Heckscheibeninnenseite plaziert. Von dort führt eine Antennensignalleitung 6 zu nicht gezeigten, nachgeschalteten Komponenten, wie z.B. einem herkömmlichen GPS-Receiver, der als Empfangs- und Auswerteeinheit fungiert, indem er die zugeführten, hochfrequenten GPS-Signale demoduliert, decodiert und die momentane Fahrzeugposition daraus bestimmt. Diese Positionsinformation gibt er dann als entsprechendes Positionsdatensignal mit standardisiertem, seriellem Datenprotokoll an ein angeschlossenes Navigationsgerät des Automobils ab.

Um auch die nötige Stromversorgung des außenseitig angeordneten Antennenverstärkers 4 ohne Heckscheibendurchlbruch zu bewerkstelligen, wird die elektrische Energie in Form eines entsprechenden Wechselspannungssignals von einer nicht gezeigten Wechselstromquelle über eine Stromversorgungsleitung 7 einer Koppelspuleneinheit in Form eines lose gekoppelten Übertragers zugeführt, der aus einer außenseitigen Koppelspule 8a und einer innenseitigen Koppelspule 8b besteht. Die außenseitige Koppelspule 8a ist auf die Heckscheibenaußenseite auf der der Antenne 2 gegenüberliegenden Seite neben dem Verstärker 4 aufgebracht und mit letzterem leitungsverbunden. Die innenseitige Koppelspule 8b ist an der Heckscheibeninnenseite der außenliegenden Koppelspule 8a gegenüberliegend positioniert. Die beiden Koppelspulen 8a, 8b des Übertragers können als gedruckte Spulen ausgeführt sein und übertragen die innenseitig zugeführte elektrische Energie drahtlos durch die Heckscheibe 1 hindurch zur Speisung des Verstärkers 4.

Für das Stromversorgungs-Wechselspannungssignal wird eine vom hochfrequenten GPS-Signal, dessen Frequenz typisch bei 1,575GHz liegt, ausreichend verschiedene Frequenz, z.B. 100kHz, gewählt, so daß keine gegenseitigen Störungen der von außen nach innen erfolgenden Antennensignalübertragung einerseits und der in Gegenrichtung erfolgenden Stromversorgungssignalübertragung andererseits auftreten. Wegen des deutlichen Frequenzunterschiedes können zudem bei Bedarf die Antennensignalleitung 6 und die Stromversorgungsleitung 7 statt als getrennte Leitungen gemeinsam in ein Koaxialkabel integriert sein. Die Antenne 2 ist so ausgeführt, daß sie durch entsprechende Abschirmmaßnahmen von der kapazitiven Koppeleinheit 5a, 5b hinreichend entkoppelt ist.

Wie aus Fig. 1 ersichtlich, sind die an der Heckscheibeninnenseite angeordneten Systemkomponenten, d.h. die innenseitige Koppelfläche 5b und die innenseitige Koppelspule 8b mit ihren Leitungsverbindungen, sichtgeschützt hinter einer Innenverkleidung 9 angeordnet, wobei die Antennensignalleitung 6 und die Stromversorgungsleitung 7 zwischen Innenverkleidung 9 und einem die Heckscheibe 1 einfassenden Karosserieflansch 10 weitergeführt sind.

Das in Fig. 2 gezeigte Ausführungsbeispiel entspricht funktionell demjenigen von Fig. 1 und unterscheidet sich von diesem nur durch eine konzentrische statt der nebeneinanderliegenden Komponentenplazierung von Fig. 1. Speziell ist im Beispiel von Fig. 2 der Verstärker 4 unterhalb des Aufbaus der GPS-Antenne 2 angeordnet, wobei die außenseitige Koppelfläche 5a innerhalb des Verstärkers 4 auf der Heckscheibe 1 liegt, und zwar im Innern einer insoweit zu einer Ringform modifizierten außenseitigen Massefläche 3a, der eine entsprechende innenseitige Massefläche 3b gegenüberliegt, in deren Innerem sich die innenseitige Koppelfläche 5b befindet. Alle diese genannten Komponenten werden konzentrisch von der außenseitigen bzw. der innenseitigen Koppelspule 8a, 8b umgeben. Wie leicht erkennbar, läßt sich mit dieser konzentrischen Anordnung der Flächenbedarf minimieren, wobei sich der gesamte Aufbau in dem von der Innenverkleidung 9 ohnehin abgedeckten Heckscheibenbereich unterbringen läßt. Zur Bezugserdung ist die innenseitige Massefläche 3b an eine Masseleitung 11 angeschlossen.

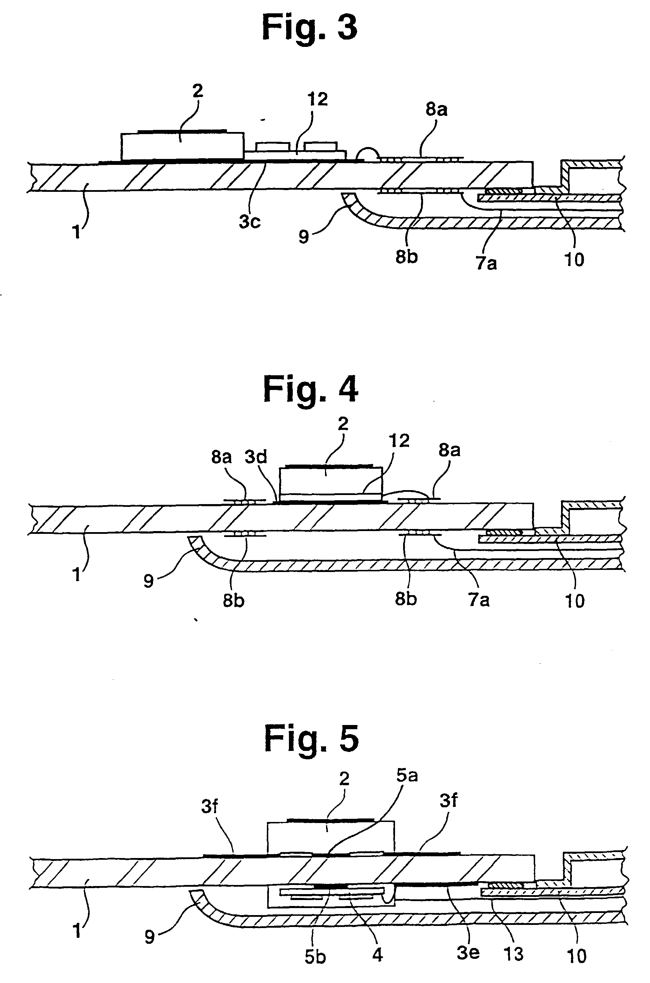

Beim Ausführungsbeispiel von Fig. 3 ist ein schon erwähnter GPS-Receiver 12 nicht im Fahrzeuginneren, sondern neben der GPS-Antenne 2 an der Außenseite der Heckscheibe 1 angeordnet. Der Antennenverstärker 4 der Fig. 1 und 2, der ansonsten zum Ausgleich von Leitungsverlusten und zur Impedanzanpassung dient, kann hierbei entfallen oder in den GPS-Receiver 12 integriert. sein. Die Koppelspuleneinheit 8a, 8b dient in diesem Fall zur Stromversorgung des GPS-Receivers 12, wozu dieser mit der außenseitigen Koppelspule 8a leitungsverbunden ist. Gleichzeitig dient die Koppelspuleneinheit 8a, 8b in diesem Beispiel zur Antennensignalübertragung, genauer gesagt zur Übertragung des vom GPS-Receiver 12, der als Empfangs- und Auswerteeinheit fungiert, abgegebenen Positionssignals mit seriellem Datenprotokoll. Dazu wird nur in bestimmten Zeitanteilen, z.B. nur für eine Dauer von 500ms während einer Sekunde, das Stromversorgungs-Wechselspannungssignal an die innenseitige Koppelspule 8b angelegt, während in den Stromversorgungspausen das serielle Datenprotokoll mit der Ortungsinformation über denselben Signalpfad, jedoch in Gegenrichtung übertragen wird, indem es an die außenseitige Koppelspule 8a angelegt wird.

Zur Weiterleitung beider Signalarten kann ein gemeinsames Koaxialkabel 7a verwendet werden ohne daß spezielle Abschirmmaßnahmen erforderlich sind. Die kapazitive Koppeleinheit kann in diesem Beispiel entfallen. Eine insoweit modifzierte außenseitige Massefläche 3c erstreckt sich nicht nur unter der Antenne 2, sondern zusätzlich unter dem Receiver 12. Antenne 2, Receiver 12 und außenseitige Koppelspule 8a liegen nebeneinander auf der Heckscheibenaußenseite, und die verbleibende innenseitige Systemkomponente, d.h. die innenseitige Koppelspule 8b, ist sichtgeschützt von der Innenverkleidung verdeckt. Von dort führt das Koaxialkabel 7a zwischen Innenverkleidung 9 und Karosserieflansch 10 zu einem nicht gezeigten Navigationsgerät.

Das in Fig. 4 gezeigte Ausführungsbeispiel entspricht funktionell demjenigen von Fig. 3, beinhaltet demgegenüber jedoch statt einer nebeneinanderliegenden eine konzentrische Komponentenanordnung analog zu Fig. 2. Speziell ist im Beispiel von Fig. 4 der GPS-Receiver 12 auf einer insoweit modifizierten außenseitigen Massefläche 3d unter dem Aufbau der GPS-Antenne 2 positioniert. Die genannten Komponenten liegen konzentrisch innerhalb der außenseitigen Koppelspule 8a, welcher die innenseitige Koppelspule 8b von der Innenverkleidung 9 sichtgeschützt gegenüberliegt. Ersichtlich minimiert diese konzentrische Anordnung wiederum den Bedarf an Heckscheiben-Montagefläche, und das Antennensystem läßt sich insgesamt in dem von der Innenverkleidung 9 eingefaßten Heckscheibenbereich unterbringen.

Fig. 5 zeigt ein Ausführungsbeispiel, bei dem nur der passive Teil des Antennensystems, d.h. das GPS-Antennenbauteil 2, außenseitig an der Heckscheibe 1 angebracht ist. Der Antenne 2 gegenüberliegend ist der Antennenverstärker 4, optional zusätzlich oder stattdessen der GPS-Receiver, an der Heckscheibeninnenseite angeordnet. Das von der Antenne 2 abgegriffene Signal wird in diesem Fall direkt drahtlos durch die Heckscheibe 1 hindurch zum Verstärker 4 bzw. Receiver übertragen, wozu die entsprechende kapazitive Koppeleinheit 5a, 5b dient, deren außenseitige Koppelfläche 5a sich hierbei unter dem Aufbau der Antenne 2 befindet, während ihre innenseitige Koppelfläche 5b unter dem Aufbau des Verstärkers 4 bzw. Receivers liegt. Da keine Stromversorgung außenseitiger Systemkomponenten benötigt wird, kann die Koppelspuleneinheit hier entfallen. Eine zwischen Innenverkleidung 9 und Karosserieflansch 10 weiterführende Leitung 13 dient zur Weiterleitung des verstärkten Antennensignals zu einem nachgeschalteten GPS-Receiver bzw. bei an der Heckscheibeninnenseite plaziertem Receiver des von diesem abgegebenen Positionsdatensignals zu einem nachgeschalteten Navigationsgerät. Zwecks Bezugserdung sind wiederum geeignete innenseitige und außenseitige Masseflächen 3e, 3f vorgesehen.

Wie aus Fig. 5 zu erkennen, läßt sich auch in diesem Beispiel der gesamte Antennensystemaufbau mit sehr geringem Flächenbedarf an der Heckscheibe 1 innerhalb des von der Innenverkleidung 9 eingefaßten Scheibenbereichs anordnen. Im übrigen besitzt dieses Ausführungsbeispiel analoge Eigenschaften und Funktionen, wie sie oben zum Beispiel von Fig. 1 angegeben sind, was auch für die Beispiele der Fig. 2 bis 4 gilt.

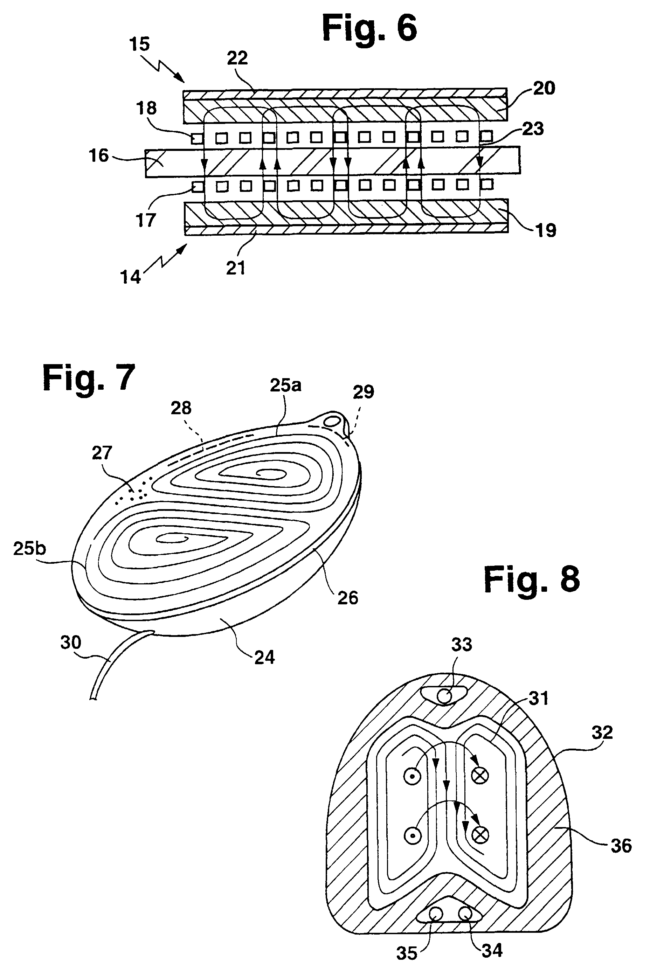

Die Fig. 6 bis 10 zeigen erfindungsgemäße Beispiele vorteilhafter drahtloser Übertragungsstrukturen zur Kopplung zwischen innen- und außenseitigem Systemteil eines jeweiligen Fahrzeug-Antennensystems mit Energieübertragung von innen nach außen und uni- oder bidirektionaler Datensignalübertragung, jeweils durch eine Montagefläche hindurch, wie eine Fahrzeugscheibenfläche. Dabei ist insbesondere die Verwendung von Kopplungsstrukturen, die von elektrischen und/oder elektromagnetischen Feldern und/oder Wellen Gebrauch machen, in sogenannter Geschlossenfeld-Ausführung veranschaulicht, bei der durch entsprechenden Aufbau die elektrischen und/oder magnetischen Feldlinien in einem begrenzten Bereich gehalten werden und sich dadurch nicht wesentlich in einen Fernfeldbereich erstrecken. Dies hat den Vorteil, daß solche Kopplungsstrukturen gegenüber Fernfeldeinkopplung und -auskopplung unempfindlich und daher eine entsprechende EMV(elektromagnetische Verträglichkeit)-Sicherheit bieten, beispielsweise gegen Abstrahlung und gegen andere strahlungssensitive oder strahlungsemittierende Komponenten im Fahrzeug. Solche induktiven Geschlossenfeld-Strukturen lassen sich z.B. durch gegensinnige, übereinander- oder nebeneinanderliegende, stromdurchflossene elektrische Leiterwindungen und/oder durch eine die induktive Windungsstruktur umgebende Kurzschlußwindung, sogenannte Kurzschlußmaske, erzielen. Diese Strukturen können primärseitig, d.h. auf der Sendeseite, und/oder sekundärseitig, d.h. auf der Empfangsseite, vorgesehen sein, wobei je nach Anwendungsfall der Sendeteil am inneren oder äußeren Antennensystemteil und der Empfangsteil am jeweils anderen Antennensystemteil angeordnet ist. Mögliche induktive Windungsstrukturen für eine Kopplung durch eine Fahrzeugscheibe hindurch sind z.B. Strukturen mit einer oder mehreren, achterförmigen Windungen, mäanderförmige Windungsstrukturen mit einer oder mehreren Mäanderwindungen und spiralförmige Windungsstrukturen.

Fig. 6 zeigt eine derartige induktive Geschlossenfeld-Struktur zwischen einem inneren Systemteil 14 und einem äußeren Systemteil 15, die zur drahtlosen Übertragung von Stromversorgungssignalen vom inneren Systemteil 14 zum äußeren Systemteil 15 durch eine Glasscheibe 16 hindurch nutzbar ist. Der äußere Systemteil 15 kann hierbei den Fuß einer im übrigen nicht gezeigten Antenne bilden. Beide Antennensystemteile 14, 15 weisen an ihrer scheibenzugewandten Seite je eine induktive Geschlossenfeld-Struktur 17, 18 auf, die zueinander passend angeordnet sind und z.B. jeweils aus einer kombinierten Spiral-Mäander-Windungsstruktur bestehen. An den scheibenabgewandten Seiten der induktiven Kopplungsstrukturen 17, 18 ist jeweils eine magnetisch leitfähige Feldführungsschicht in Form einer Ferritfolie 19, 20 angeordnet, die wiederum auf ihrer der Kopplungsstruktur abgewandten Seite mit einer elektrisch hochleitenden Beschichtung 21, 22 versehen ist. Die so aufgebaute Kopplungsstruktur erlaubt eine elektromagnetische Energieübertragung zwischen den beiden Systemteilen 14, 15, bei der die Magnetfeldlinien 23 praktisch vollständig auf den Bereich zwischen den elektrisch hochleitenden Beschichtungen 21, 22 beschränkt bleiben, ohne sich darüber hinaus in einen Fernfeldbereich zu erstrecken. Optional kann für jeden Systemteil eine die zugehörige induktive Kopplungsstruktur 17, 18 umgebende Kurzschlußmaske vorgesehen sein.

Fig. 7 zeigt in einer perspektivischen Draufsicht auf einen inneren Systemteil 24 eine an dessen Kopplungsseite vorgesehene induktive Kopplungsstruktur in Form zweier Spiralen 25a, 25b, wie sie auch für das Beispiel von Fig. 6 geeignet sind. Die übrigen Komponenten des inneren Systemteils 24 sind in nicht gezeigter Weise im Gehäuse desselben untergebracht. Die Kopplungsstruktur 25a, 25b wird von einer Kontaktfläche 26 getragen. Durch eine Haftbeschichtung 27 kann der innere Systemteil 24 z.B. an einer Fahrzeugscheibe festgelegt werden. Bei Bedarf kann die strukturtragende Kontaktfläche 26, wenn die zugehörige Montagefläche gewölbt ist, mit einer Ausgleichsschicht versehen sein, die nach Anbringen des Antennensystemteils in einer die Montageflächenwölbung ausgleichenden Form verbleibt. Optional ist die Kopplungsstruktur 25a, 25b von einer nur gestrichelt teilweise angedeuteten Kurzschlußwindung 28 umgeben.

Um eine genaue Justierung der Kopplungsstruktur 25a, 25b des inneren Systemteils mit derjenigen des nicht gezeigten äußeren Systemteils auf einfache Weise zu ermöglichen, ist randseitig an einer Stelle eine Justiermarkierung 29 am Gehäuse des inneren Systemteils 24 ausgebildet, zu welcher eine entsprechende Justiermarkierung am äußeren Systemteil fluchtend ausgerichtet wird, so daß dann die zusammenwirkenden Kopplungsstrukturen exakt justiert sind. Ein Anschlußkabel 30 dient der Zuführung und Weiterleitung von Stromversorgungs- und Datensignalen.

Fig. 8 zeigt eine Draufsicht auf die Unterseite, d.h. Kontaktseite, eines inneren Systemteils eines Antennensystems mit optischer Datensignalübertragung. Die hier zur drahtlosen Übertragung von Stromversorgungs- und Datensignalen vorgesehene Kopplungsstruktur beinhaltet eine induktive Geschlossenfeld-Struktur 31 zur Energieübertragung vom inneren Systemteil 32 auf einen korrespondierenden, nicht gezeigten äußeren Systemteil, eine Empfangs-LED 33, eine Sende-LED 34 und eine Status-LED 35. Die Kopplungsstruktur ist von einer Massemaske 36 umgeben. Der Träger der Kopplungsstruktur kann analog zu dem Beispiel von Fig. 6 eine Ferritfolie mit außenseitiger Metallisierung beinhalten, wobei die Folie auf ein PCB-Laminat aufgebracht sein kann. Mittels einer Klebekontaktfolie kann der innere Systemteil 32 z.B. an einer Fahrzeugscheibe angebracht werden, wobei die Klebekontaktfolie zwischen Scheibe und induktiver Struktur 31 spaltfüllend wirkt. Die Ferritfolie ist an den Stellen der LEDs mit entsprechenden Öffnungen zwecks Lichttransfer versehen. Über die Sende- und Empfangs-LEDs 33, 34 des inneren Systemteils 32, denen entsprechende Empfangs- und Sende-LEDs am äußeren Systemteil gegenüberstehen, lassen sich Datensignale bidirektional zwischen innerem und äußerem Systemteil drahtlos optisch übertragen. Über die Status-LED kann eine Statusinformation optisch zwischen den Systemteilen übertragen werden.

Die in den Fig. 6 bis 8 gezeigten induktiven Koppelstrukturen erlauben die Übertragung der gesamten, zum Betrieb des äußeren Systemteils notwendigen Energie, auch wenn das zugehörige Antennenbauteil als Sendeantenne fungiert und hierfür Sendeenergien von z.B. 5W erfordert.

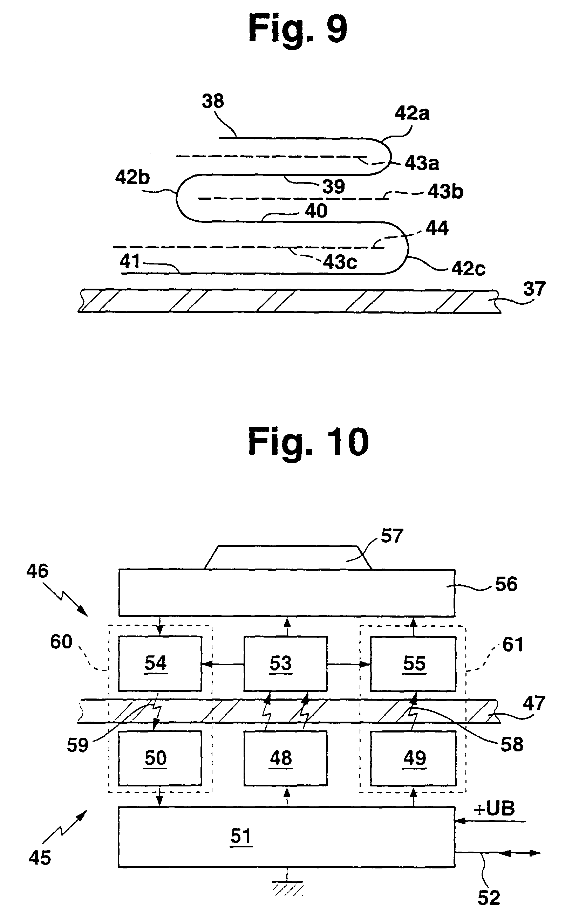

Fig. 9 zeigt schematisch einen weiteren, vorteilhaften Aufbau der für einen äußeren, z.B. außen an einer Fahrzeugscheibe 37 anbringbaren, Systemteil eines Antennensystems. Hier ist der äußere Systemteil als Schichtlaminat mit einer äußeren Antennenträgerschicht 38, einer darunterliegenden Datenempfangs- und/oder Datensendeschicht 39, einer darunterliegenden Energiewandlungs- und Frequenzaufbereitungsschicht 40 und einer scheibenseitigen Koppelschicht 41 aufgebaut. Die einzelnen Schichten 38 bis 41 besitzen beispielsweise eine kreisförmige Gestalt mit von der Scheibe 37 nach außen abnehmendem Durchmesser und sind über streifenförmige Faltzonen 42a, 42b, 42c miteinander verbunden. Zwischen je zwei Schichten sind Isolierlagen 43a, 43b, 43c eingebracht. Die an die Koppelschicht 41 angrenzende Zwischenlage 43c kann als Ferritfolienpackung ausgebildet sein, die auf ihrer koppelschichtabgewandten Seite mit einer Metallschicht 44 versehen ist. Die einstückige Bildung dieser äußeren Systemteilstruktur über die Faltzonen 42a, 42b, 42c macht eine Mehrschichtrealisierung möglich, die keine separaten Kontaktierungen zwischen den einzelnen Schichten 38, bis 41 erfordert, diese können vielmehr über die Faltzonen 42, 42b, 42c geführt werden. Dies erleichtert die Außenmontage und erhöht die Funktionszuverlässigkeit.

Fig. 10 zeigt schematisch ein Antennensystem, das sich für bidirektionalen Datentransfer z.B. als Komponente eines Telekommunikationssystems im Fahrzeug eignet.

Dieses Antennensystem beinhaltet einen innneren Systemteil 45 und einen äußeren Systemteil 46, die innen bzw. außen an einer Fahrzeugscheibe 47 angebracht sind und einen Koppelteil umfassen, der sowohl einen Energietransfer von innen nach außen als auch einen bidirektionalen Datentransfer erlaubt. Hierzu beinhaltet der innere Systemteil einen Stromversorgungssignalgenerator 48, einen Datensendeteil 49 und einen Datenempfangsteil 50, und diese drei Komponenten an einer Sende-/Empfangssteuereinheit 51 mit geeigneter Datenschnittstelle angeschlossen sind und diese Steuereinheit 51 von einer zugeführten Spannung +U_{B} versorgt wird und an eine bidirektionale Datenleitung 52 angeschlossen ist. Der äußere Systemteil 46 beinhaltet passend zu den Transferkomponenten des inneren Systemteils 45 einen Stromversorgungssignalempfänger 53, einen Datensendeteil 54 und einen Datenempfangsteil 55. Diese drei Komponenten 53, 54, 55 sind an eine Sende-/Empfangs-Duplexweiche 56 angeschlossen, mit der ein Antennenbauteil 57 verbunden ist. Die Datensignalkopplungen 58, 59 zwischen jeweiligem Sende- und Empfangsteil 49, 54 bzw. 50, 55 können je nach Bedarf kapazitiv, induktiv oder optisch realisiert sein. Dabei kann die Glasscheibe 47 an beliebiger Stelle im Signalverarbeitungspfad des jeweils aus einem Sende- und einem Empfangsteil gebildeten Datenübertragungsteils 60, 61 als Trennstelle wirken, wobei der eine Übertragungsteil 61 als Sendeübertragungsteil, d.h. zur Übertragung von vom Antennensystem zu sendenden Daten, und der andere Übertragungsteil 60 entsprechend als Empfangsübertragungsteil zum Übertragen von vom Antennensystem empfangenen Daten fungiert. Dies bedeutet, daß im jeweiligen Übertragungsteil 60, 61 die Komponenten in beliebiger, je nach Anwendungsfall günstigster Weise auf den inneren und den äußeren Systemteil 45, 46 aufgeteilt werden können.

Besonders auch bei Verwendung flacher Patch-Antennenbauteil ist es günstig, Vereisungserscheinungen verhindern, d.h. gegebenenfalls ein schnelles Enteisen bewirken zu können. Hierzu kann optional eine Beheizung des äußeren Systemteils in Form eines Heizelementes vorgesehen sein, das ausschließlich von der vom inneren Systembauteil übertragenen Energie gespeist wird, so daß keine Fremdenergie zu Heizzwecken extern zugeführt werden muß. Dazu ist am äußeren Systemteil vorzugssweise ein ohmsches Heizwiderstandselement ausgebildet, das zwecks EMV-Gewährleistung vorzugsweise mit Gleichstrom betrieben wird, der durch Gleichrichtung des erforderlichen Anteils an den übertragenen Stromversorgungssignalen bereitgestellt wird. Als Heizelement kann insbesondere eine vorhandene Kurzschlußmaske dienen, welche eine induktive Geschlossenfeld-Struktur z.B. spiralförmig umgibt. Bei Realisierung einer mit Gleichstrom beheizbaren Kurzschlußmaske kann letztere in feine Heizwindungen aufgelöst sein, die hochfrequenzmäßig kapazitiv kurzgeschlossen sind. Im Ausführungsbeispiel von Fig. 9 kann zu Heizzwecken beispielsweise der jeweilige Rand einer jeden Schicht 38 bis 41 als ohmsche Heizzone ausgebildet sein. Dadurch läßt sich eine große wärmeabgebende Fläche erzielen, die mit geeignet mäanderförmigen Heizpfaden belegbar ist. Je größer die wärmeabgebende Fläche, um so niedriger ist die erforderliche Temperaturanhebung und damit der erforderliche Heizstrom. Ein solches Heizelement kann in einfacher Weise mit einem PCB-Laminat integriert realisiert sein, ohne problematische separate Kontaktierstellen und daher mit hoher Funktionszuverlässigkeit.

Wie die obige Beschreibung einiger Beispiele zeigt, hat das erfindungsgemäße Antennensystem den Vorteil, daß zu seiner Anbringung an einer Fahrzeugheckscheibe oder einer beliebigen anderen Montagefläche ausreichend geringer Leitfähigkeit keine Durchbrüche in der Montagefläche benötigt werden, selbst wenn eine Stromversorgung außenseitig montierter Komponenten erforderlich ist. Die außenseitige Montage des Antennenbauteils vermeidet Probleme bezüglich Dämpfung, Abschattung und Verstimmung der Antenne aufgrund der Montagefläche. Die Montagefläche kann vielmehr in ihren geometrischen und Materialeigenschaften in weiten Grenzen variieren, solange ihre elektrische Leitfähigkeit genügend klein bleibt. Daraus folgt, daß das erfindungsgemäße Antennensystem gut zur Nachrüstung geeignet ist und sich zudem in gleichbleibender Bauart für unterschiedliche Fahrzeugtypen einsetzen läßt.

## Patentansprüche

1. Antennensystem für eine Datenkommunikationseinheit in einem Fahrzeug, insbesondere für eine satellitengestützte Navigationseinrichtung, mit
- einem außenseitig an einer Montagefläche (1) der Fahrzeugkarosserie anzuordnenden Systemteil, der ein Antennenbauteil (2) beinhaltet,
- einem innenseitig anzuordnenden Systemteil und
- Kopplungsmitteln zur Signalkoppelung von außenseitigem und innenseitigem Systemteil,
**dadurch gekennzeichnet, daß**
- der außenseitig an der Montagefläche (1) anzuordnende Systemteil wenigstens eine energieverbrauchende Systemkomponente aufweist und
- die Kopplungsmittel aus Signalübertragungsmitteln (5a, 5b, 8a, 8b) bestehen, welche Stromversorgungssignale drahtlos durch die Montagefläche (1) hindurch vom innenseitigen zum außenseitigen Systemteil übertragen.

2. Antennensystem nach Anspruch 1, weiter
**dadurch gekennzeichnet, daß**
die Signalübertragungsmittel Stromversorgungssignale induktiv und Datensignale kapazitiv, induktiv oder optisch mittels elektrischer und/oder elektromagnetischer Felder und/oder Wellen durch die Montagefläche (1) hindurch übertragen.

3. Antennensystem nach Anpruch 1 oder 2, weiter
**dadurch gekennzeichnet, daß**
die Signalübertragungsmittel eine induktive Offenfeld- oder Geschlossenfeld-Spiralpfadstruktur (17, 18) am inneren und am äußeren Systemteil (14, 15) aufweisen.

4. Antennensystem nach Anspruch 3, weiter
**dadurch gekennzeichnet, daß**
die induktive Geschlossenfeld-Struktur mehrere gegenläufige Strompfadwindungen und/oder eine strukturumschließende Kurzsschlußmaske umfaßt.

5. Antennensystem nach Anspruch 4, weiter
**dadurch gekennzeichnet, daß**
die Kurzschlußmaske gleichzeitig als ohmsches Heizelement fungiert, das mit Energie der vom innenseitigen zum außenseitigen Systemteil übertragenen Stromversorgungssignale gepeist wird.

6. Antennensystem nach einem der Ansprüche 3 bis 5, weiter
**dadurch gekennzeichnet, daß**
die induktive Geschlossenfeld-Struktur auf ihrer von der Montagefläche abgewandten Seite von einer magnetisch leitfähigen Feldführungsschicht (19, 20) abgedeckt ist.

7. Antennensystem nach Anspruch 6, weiter
**dadurch gekennzeichnet, daß**
die Feldführungschicht (19, 20) auf ihrer von der induktiven Geschlossenfeld-Struktur abgewandten Seite mit einer elektrisch hochleitenden Beschichtung (21, 22) versehen ist.

8. Antennensystem nach einem der Ansprüche 2 bis 7, weiter
**dadurch gekennzeichnet, daß**
- die Signalübertragungsmittel separate Lichtsignalübertragungsstrecken (33, 34) für empfangene und zu sendende Daten aufweisen.

9. Antennensystem nach einem der Ansprüche 1 bis 8, weiter
**dadurch gekennzeichnet, daß**
- der außenseitige Systemteil einen Antennenverstärker (4) beinhaltet und
- die Signalübertragungsmittel eine kapazitive Koppeleinheit (5a, 5b) zur Übertragung von Datensignalen vom Antennenbauteil (2) und eine Koppelspuleneinheit (8a, 8b) zur Übertragung von innenseitig zugeführten Stromversorgungs-Wechselspannungssignalen aufweisen.

10. Antennensystem nach Anspruch 9, weiter
**dadurch gekennzeichnet, daß**
- das Antennenbauteil (2), der Antennenverstärker (4) und eine außenseitige Koppelfläche (5a) der kapazitiven Koppeleinheit neben oder innerhalb einer außenseitigen Koppelspule (8a) der Koppelspuleneinheit angeordnet sind.

11. Antennensystem nach einem der Ansprüche 1 bis 8, weiter
**dadurch gekennzeichnet, daß**
- der außenseitige Systemteil eine Signalverarbeitungseinheit (12) beinhaltet und
- die Signalübertragungsmittel eine Koppelspuleneinheit (8a, 8b) zur Übertragung sowohl von Datensignalen als auch von Stromversorgungs-Wechselspannungssignalen zwischen der Signalverarbeitungseinheit und dem innenseitigen Systemteil aufweisen.

12. Antennensystem nach Anspruch 11, weiter
**dadurch gekennzeichnet, daß**
das Antennenbauteil (2) und die Signalverarbeitungseinheit (12) neben oder innerhalb einer außenseitigen Koppelspule (8a) der Koppelspuleneinheit angeordnet sind.

13. Antennensystem nach einem der Ansprüche 1 bis 8, weiter
**dadurch gekennzeichnet, daß**
- der innenseitige Systemteil einen Antennenverstärker (4) und/oder eine Signalverarbeitungseinheit (12) beinhaltet und
- die Signalübertragungsmittel eine kapazitive Koppeleinheit (5a, 5b) zur Übertragung der Antennensignale zwischen dem Antennenbauteil (2) einerseits und dem Antennenverstärker bzw. der Signalverarbeitungseinheit andererseits aufweisen.

14. Antennensystem nach einem der Ansprüche 1 bis 13, weiter
**dadurch gekennzeichnet, daß**
der innenseitige Systemteil eine Koaxialleitung beinhaltet, über die sowohl die Antennensignale als auch die Stromversorgungs-Wechselspannungssignale geführt werden.
